(19) Europäisches Patentamt
European Patent Office
Office européen des brevets

(11) Veröffentlichungsnummer: **0 066 772**
**A2**

(12) # EUROPÄISCHE PATENTANMELDUNG

(21) Anmeldenummer: **82104538.2**

(22) Anmeldetag: **25.05.82**

(51) Int. Cl.[3]: **C 08 L 69/00**, C 08 K 3/34, C 08 J 5/18

(30) Priorität: **05.06.81 US 270708**
**29.12.81 US 334668**

(43) Veröffentlichungstag der Anmeldung: **15.12.82**
**Patentblatt 82/50**

(84) Benannte Vertragsstaaten: **DE FR GB IT NL**

(71) Anmelder: **Mobay Chemical Corporation, Penn Lincoln Parkway West, Pittsburgh, Pennsylvania 15205 (US)**

(72) Erfinder: **Carter, Russel P. Jr., 12 Orchard Drive, New Martinsville, WV 26 155 (US)**

(74) Vertreter: **Gremm, Joachim, Dr. et al, Bayer AG c/o Zentralbereich Patente, Marken und Lizenzen, D-5090 Leverkusen 1, Bayerwerk (DE)**

(54) **Polycarbonat-Silicat-Zusammensetzungen.**

(57) Polycarbonat-Zusammensetzungen aus einem aromatischen Polycarbonat-Harz, in dem feinteilige Silicate dispergiert sind, sind besonders geeignet zur Herstellung von Folien mit einem niedrigen Koeffizienten der statischen Reibung und hoher Lichtdurchlässigkeit, die praktisch frei von Trübungen sind.

EP 0 066 772 A2

Mobay Chemical Corporation

## Polycarbonat-Silicat-Zusammensetzungen

Die vorliegende Erfindung betrifft Polycarbonat-Zusammensetzungen und insbesondere Gemische aus aromatischen Polycarbonaten und Silicaten.

Es wurde gefunden, daß eine aus einem aromatischen thermoplastischen Polycarbonat-Harz, in dem feinteilige Silicate dispergiert sind, bestehende Polycarbonat-Zusammensetzung für die Herstellung von Feinfolien, die einen niedrigen Koeffizienten der statischen Reibung und eine hohe Lichtdurchlässigkeit besitzen und praktisch frei von Trübungen sind, besonders geeignet sind.

Polycarbonate, die sich aus einer Reaktion unter Beteiligung organischer Dihydroxy-Verbindungen und Kohlensäure-Derivaten ableiten, haben wegen ihrer ausgezeichneten mechanischen und physikalischen Eigenschaften weit verbreitete technische Anwendung gefunden. Diese thermoplastischen Polymerisate sind besonders geeignet für die Herstellung von Formteilen, bei denen es auf Schlagzähigkeit, Steifigkeit, Zähigkeit, thermische Beständigkeit und Formbeständigkeit sowie ausgezeichnete elektrische Eigenschaften ankommt. Weiterhin sind Polycarbonate hervorragend geeignet für das Gießen oder Extrudieren zu Feinfolien, die sich durch eine hohe Transparenz, Farbbeständigkeit und Beständigkeit gegenüber Oxidation sowie flammwidriges Verhalten auszeichnen.

Ein Nachteil von Feinfolien auf Polycarbonat-Basis ist der hohe Koeffizient der statischen Reibung, ein Faktor, der ihre Handhabbarkeit beeinflußt und ihren Wert etwas einschränkt. Nach der Erfahrung von Fachleuten neigen die Oberflächen der Folien zum Kleben, wenn man sie über ähnliche Oberflächen gleiten läßt. Eine Neigung, die gelegentlich als Blockierungsneigung ("blockiness") bezeichnet wird und weitgehend auf ihren hohen Koeffizienten der statischen Reibung zurückgeht.

In diesem Zusammenhang wird verwiesen auf "Slip and Antiblock Agents - A Guide to their Use" von H.W. Mock et al; Plastics Technology, August 1974, Seite 41; "Slip and Antiblocking Agents - Attaining that Delicate Balance" von A.M. Birks, Plastics Technology, July 1977, Seite 131; und "Does the slip of your web help or hurt its performance?" von R.L. Mueller, Package Engineering, April 1973, Seite 61.

Versuche zur Erniedrigung dieser Reibung mit Hilfe chemischer modifizierender Mittel sind insofern nicht vollständig zufriedenstellend, als derartige Modifikationen andere erwünschte Eigenschaften der Folien nachteilig beeinflußt. Die US-PS 3 424 703 lehrt die Erniedrigung des Reibungskoeffizienten von Polycarbonat-Folien durch Zusatz

kleiner Mengen Siliciumdioxid oder Talcum. Ein auffälliger,durch die Verwendung von Siliciumdioxid bedingter Nachteil betrifft die Begrenzung auf eine Menge von etwa 1 Gewichtsteil pro 100 Teile des Harzes, die in Polycarbonate eingearbeitet werden können, bevor Verarbeitunsschwierigkeiten auftreten.Gegenstand der vorliegenden Erfindung ist demnach eine Polycarbonat-Silicat-Zusammensetzung von verbesserter Verarbeitbarkeit, die für die Herstellung von Folien mit einem niedrigen statischen Reibungskoeffizienten geeignet ist. Gegenstand der vorliegenden Erfindung ist weiter eine Polycarbonat-Silicat-Konzentratzusammensetzung, die bis zu etwa 5 Teilen Silicat pro 100 Teile des Harzes enthält.

Die für die praktische Anwendung der vorliegenden Erfindung geeigneten Polycarbonat-Harze sind Homopolycarbonate, Copolycarbonate und Terpolycarbonate oder Mischungen aus diesen. Die Polycarbonate besitzen im allgemeinen Molekulargewichte von 10 000 bis 200 000 (Gewichtsmitte des Molekulargewichts), vorzugsweise von 20 000 bis 80 000, und sind außerdem durch ihren Schmelzfluß-Index von 1 bis 24 g/10 min bei 300°C gemäß ASTM D-1238 gekennzeichnet. Diese Polycarbonate können beispielsweise mittels des bekannten zweiphasigen Grenzflächenverfahrens aus Phosgen und Bisphenolen durch Polykondensation hergestellt werden (vgl. die DE-OSen 2 063 050, 2 063 052, 1 570 703, 2 211 956, 2 211 957 und 2 248 817, die FR-PS 1 561 518 und die Monographie von H. Schnell, "Chemistry and Physics of Polycarbonates", Interscience Publishers, New York, 1964).

Die aromatischen Polycarbonate können auf den folgenden Bisphenolen basieren: Hydrochinon, Resorcin, Dihydroxydiphenyle, Bis-(hydroxyphenyl)alkane, Bis-(hydroxyphenyl)

cycloalkane, Bis-(hydroxyphenyl)sulfide, Bis-(hydroxyphenyl)ether, Bis-(hydroxyphenyl)ketone, Bis-(hydroxyphenyl)sulfoxide, Bis-(hydroxyphenyl)sulfone und α, α'-Bis-(hydroxyphenyl)diisopropylbenzole sowie die entsprechenden am Kern substituierten Verbindungen. Diese und andere geeignete aromatische Dihydroxy-Verbindungen sind in den US-PSen 3 028 365, 299 835, 3 148 172, 3 271 368, 2 991 273, 3 271 367, 3 780 078, 3 014 891 und 2 999 846, in den DE-OSen 1 570 703, 2 063 050 und 2 063 052 und in der FR-PS 1 561 518 beschrieben.

Bevorzugte aromatische Polycarbonate sind diejenigen, in den 5 bis 100 Mol-% der Struktureinheiten der Formel (1)

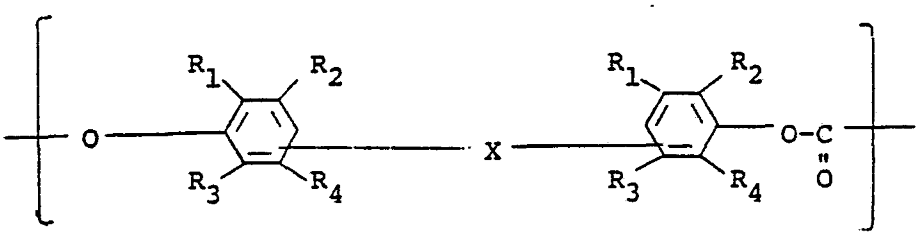 (1)

,

in der $R_1$, $R_2$, $R_3$ und $R_4$ für $C_1$-$C_{10}$-Alkyl, Cl, Br, Phenyl und H steht, X eine Einfachbindung, -O-, -CO-, S, SO, $-SO_2$, $-C_1$-$C_{10}$-Alkylen, $C_1$-$C_{10}$-Alkyliden, $C_5$-$C_{15}$-Cycloalkylen, $C_5$-$C_{15}$-Cycloalkyliden, $C_7$-$C_{20}$-Cycloalkylen, $C_6$-$C_{20}$-Cycloalkylalkyliden oder

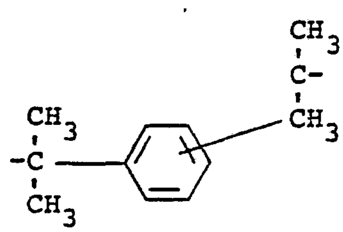

bezeichnen, und/oder der Formel (2)

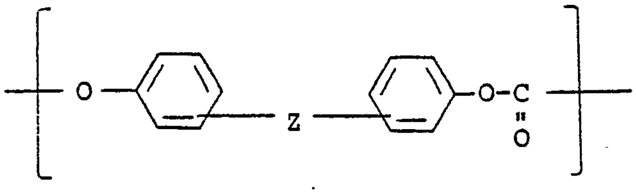 (2)

entsprechen, in der Z für $C_5$-$C_{20}$-Alkylen, $C_5$-$C_{20}$-Alkyliden, $C_5$-$C_{15}$-Cycloalkylen, $C_5$-$C_{15}$-Cycloalkyliden, $C_7$-$C_{20}$-Cycloalkylalkylen oder $C_6$-$C_{20}$ Cycloalkylalkyliden steht.

Aromatische Polycarbonate, die 5 bis 30 Mol-% Struktureinheiten der Formel (1) und/oder (2) enthalten, sowie diejenigen, die 50 bis 100 Mol-% dieser Struktureinheiten enthalten, werden besonders bevorzugt.

Bevorzugte Struktureinheiten der Formel (1) sind diejenigen der Formel (3)

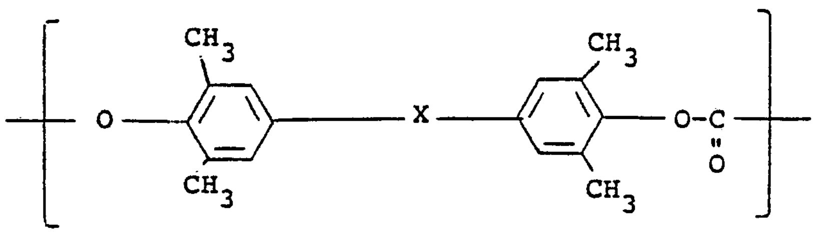 (3) ,

in denen X die oben angegebene Bedeutung hat.

Die Struktureinheiten der Formel (3) können auf den folgenden Bisphenolen basieren, beispielsweise: Bis-(3,5-dimethyl-4-hydroxyphenyl), Bis-(3,5-dimethyl-4-hydroxyphenyl)-ether, Bis-(3,5-dimethyl-4-hydroxyphenyl)carbonyl), Bis-(3,5-dimethyl-4-hydroxyphenyl)sulfon, Bis-(3,5-dimethyl-4-hydroxyphenyl)methan, 1,1-Bis-(3,5-dimethyl-4-hydroxyphenyl)-ethan, 1,1-Bis-(3,5-dimethyl-4-hydroxyphenyl)propan, 2,2-Bis-(3,5-dimethyl-4-hydroxyphenyl)butan, 2,4-Bis-(3,5-dimethyl-4-hydroxyphenyl)-2-methylbutan, 2,4-Bis-(3,5-dimethyl-4-hydroxyphenyl)butan, 3,3-Bis-(3,5-dimethyl-4-hydroxyphenyl)pentan, 3,3-Bis-(3,5-dimethyl-4-hydroxyphenyl)hexan, 4,4-Bis-(3,5-dimethyl-4-hydroxyphenyl)-heptan, 2,2-Bis-(3,5-dimethyl-4-hydroxyphenyl)octan, 2,2-Bis-(3,5-dimethyl-4-hydroxyphenyl)nonan, 2,2-Bis-(3,5-Dimethyl-4-hydroxyphenyl)decan, 1,1-Bis-(3,5-dimethyl-4-hydroxyphenyl)cyclohexan, 1,4-Bis-(3,5-dimethyl-4-hydroxyphenyl)cyclohexan, α,α'-Bis-(3,5-dimethyl-4-hydroxyphenyl)-p-diisopropylbenzol und α,α'-Bis-(3,5-dimethyl-4-hydroxyphenyl)-m-diisopropylbenzol.

Besonders bevorzugt sind diejenigen Struktureinheiten der Formel (1) und (2), die auf den nachstehenden Bisphenolen basieren: Bis-(3,5-dimethyl-4-hydroxyphenyl)methan, 2,2-Bis-(3,5-dimethyl-4-hydroxyphenyl)propan, 2,4-Bis-(3,5-dimethyl-4-hydroxyphenyl)-2-methylbutan, 1,1-Bis-(3,5-dimethyl-4-hydroxyphenyl)cyclohexan, α,α'-Bis-(3,5-dimethyl-4-hydroxyphenyl)-p-diisopropylbenzol, 2,2-Bis-(3,5-dichloro-4-hydroxyphenyl)propan, 2,2-Bis-(3,5-dibromo-4-hydroxyphenyl)propan, 1,1-Bis-(4-hydroxyphenyl)cyclohexan, α,α'-Bis-(4-hydroxyphenyl)-m-diisopropylbenzol, α,α'-Bis-(4-hydroxyphenyl)-p-diisopropylbenzol, 2,4-Bis-(4-hydroxyphenyl)-2-methylbutan, 2,2-Bis-(3-methyl-4-hydroxyphenyl)propan und 2,2-Bis-(3-chloro-4-hydroxyphenyl)propan.

Zusätzlich zu den Struktureinheiten der Formeln (1) und (2) enthalten die bevorzugten Polycarbonate vorzugsweise Struktureinheiten der Formel (4)

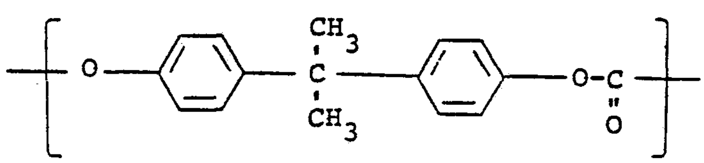

(4)

Polycarbonate, die allein auf den vorerwähnten o, o, o', o'-tetramethylsubstituierten Bisphenolen basieren, sind besonders wichtig, vor allem das Homopolycarbonat auf der Basis von 2,2-Bis-(3,5-dimethyl-4-hydroxyphenyl)propan.

Für die Herstellung der Polycarbonate gemäß der Erfindung ebenfalls geeignet sind Dihydroxybenzole der Strukturformel

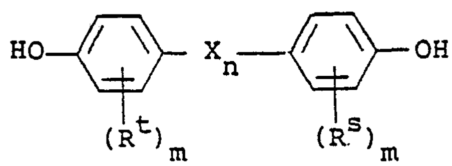

,

in der $R^t$ und $R^s$ unabhängig voneinander $C_1$-$C_{10}$-Alkyle bezeichnen, m eine ganze Zahl von 0 bis 2 ist, X $\underset{O}{\underset{\|}{S}}$, $\underset{O}{\underset{\|}{C}}$, $\underset{O}{\underset{\|}{\underset{S}{\underset{\|}{O}}}}$, oder S ist, und n entweder 0 oder 1 ist.

Zu den für die praktische Anwendung der vorliegenden Erfindung geeigneten Harzen zählen Polycarbonat auf Phenolphthal-Basis, Copolycarbonate und Terpolycarbonate, wie sie in den US-PSen 3 036 036 und 4 210 741 beschrieben sind.

Zur Erzielung spezieller Eigenschaften können auch Gemische aus verschiedenen Di-(monohydroxyaryl)alkanen verwendet werden; auf diese Weise werden gemischte Polycarbonat-Harze erhalten. Bei weitem die wertvollsten Polycarbonat-Harze sind diejenigen auf der Basis von 4,4'-Dihydroxydiarylmethanen und insbesondere Bisphenol A/2,2-(4,4'-

Dihydroxydiphenyl)propan7. So wird, wenn dem die Grundlage bildenden Polycarbonat-Harz flammwidrige Eigenschaften vermittelt werden sollen, ein Gemisch aus Bisphenol A und Tetrabromobisphenol A /2,2-(3,5,3',5'-Tetrabromo-4,4'-dihydroxydiphenyl)propan7für die Reaktion mit Phosgen oder einem ähnlichen Kohlensäure-Derivat eingesetzt. Andere halogenierte phenolische Diole sind sämtliche geeigneten Bis-hydroxyaryle wie halogenhaltige Bisphenole, etwa 2,2'-(3,3,3',5'-Tetrachloro-4,4'-dihydroxydiphenyl) propan, 2,2-(3,5,3',5'-Tetrabromo-4,4'-dihydroxydiphenyl)propan, 2,2-(3,5-Dichloro-4,4'-dihydroxydiphenyl)propan, 2,2-(3,3'-Dichloro-5,5'-dimethyl-4,4'-dihydroxydiphenyl )propan, 2,2-(3,3'-Dibromo-4,4'-dihydroxydiphenyl)propan und dergleichen. Diese halogenierten Diole werden in das Polycarbonat in Mengen eingearbeitet, die zur Vermittlung flammwidriger Eigenschaften ausreichen. Beispielsweise ist im Normalfalle ein Halogen-Gehalt von etwa 3 bis 10 Gew.-% ausreichend.

Die Polycarbonate gemäß der Erfindung können auch dadurch verzweigt sein, daß kleine Mengen von Polyhydroxyl-Verbindungen in sie durch Kondensation eingearbeitet werden, z.B. 0,05 bis 2,0 Mol-% (bezogen auf die verwendete Menge der Bisphenole). Polycarbonate dieses Typs sind beispielsweise in den DE-OSen 1 570 533, 2 116 974 und 2 113 347, den GB-PSen 885 442 und 1079 821 und den US-PSen 3 544 514 und 4 185 009 beschrieben. Nachstehend werden einige Beispiele für Polyhydroxyl-Verbindungen aufgeführt, die zu diesem Zweck verwendet werden können: Phloroglucin, 4,6-Dimethyl-2,4,6-tri-(4-hydroxyphenyl)hepten-2, 4,6-Dimethyl-2,4,6-tri-(4-hydroxyphenyl)heptan, 1,3,5-Tri-(4-hydroxyphenyl)benzol, 1,1,1-Tri-(4-hydroxyphenyl)ethan, Tri-(4-hydroxyphenyl)phenylmethan, 2,2-Bis-/4,4-(4,4'-dihydroxy-

diphenyl)-cyclohexyl7propan, 2,4-Bis-(4-hydroxyphenyl-4-isopropyl)phenol, 2,6-Bis-(2'-dihydroxy-5'-methylbenzyl)-4-methylphenol, 2,4-dihydroxy-benzoesäure, 2-(4-Hydroxy-phenyl)-2-(2,4-dihydroxyphenyl)propan, 1,4-Bis-(4',4"-dihydroxytriphenylmethyl)benzol und 3,3-Bis-(4-hydroxyphenyl)-oxindol.

Neben dem oben erwähnten Polykondensationsverfahren, dessen wesentliche Merkmale im folgenden beschrieben werden, sind andere Verfahren für die Herstellung der Polycarbonate gemäß der Erfindung die Polykondensation in homogener Phase und die Umesterung. Die geeigneten Verfahren sind in den US-PSen 3 028 365, 2 999 846, 3248 414, 3 153 008, 3 215 668, 3 187 065, 2 064 974, 2 070 137, 2 991 273 und 2 000 835 beschrieben.

Das bevorzugte Verfahren ist das Grenzflächen-Polykondensationsverfahren.

Nach dem Grenzflächen-Polykondensationsverfahren werden Copolycarbonat-Harze durch Reaktion der aromatischen Dihydroxy-Verbindungen mit einem Alkalimetallhydroxid oder einem Erdalkalimetalloxid oder -hydroxid erhalten, wobei die Salze der Hydroxy-Verbindungen gebildet werden. Die Salzmischung liegt in wäßriger Lösung oder Suspension vor und wird mit Phosgen, Carbonylbromid oder Bis-Chlorameisensäureestern der aromatischen Dihydroxy-Verbindungen umgesetzt. Der Reaktionsmischung ist ein organisches Lösungsmittel zugesetzt, das ein Lösungsmittel für das Polymerisat, jedoch nicht für die aromatischen Dihydroxy-Salze ist. So werden chlorierte aliphatische Kohlenwasserstoffe oder chlorierte aromatische Kohlenwasserstoffe als das organische Lösungsmittel verwendet, das das Kondensationsprodukt löst. Zur Begrenzung des Molekulargewichts kann man monofunktionelle Reaktionsteilnehmer wie Monophenole, z.B. die Propyl-, Isopropyl- und Butyl-Phenole, insbesondere p-tert-Butylphenol und Phenol selbst verwenden. Zur Beschleunigung der Reaktion können Katalysatoren wie tertiäre Amine, quaternäre Ammonium-, Phosphonium- oder Arsonium-Salze und dergleichen verwendet werden. Die Reaktionstemperatur sollte etwa -20°C bis + 150°C, vorzugsweise 0°C bis etwa 100°C betragen.

Nach dem Polykondensationsverfahren in homogener Phase werden die gelösten Reaktionsbestandteile in einem inerten Lösungsmittel in Gegenwart einer äquivalenten Menge einer tertiären Amin-Base polykondensiert, die zur Aufnahme des erzeugten HCl benötigt wird. Wie z.B. N,N-Dimethylanilin, N,N-Dimethylcyclohexylamin oder, vorzugsweise, Pyridin und dergleichen. In noch einem anderen Verfahren kann ein Diarylcarbonat mit den aromatischen Dihydroxy-Verbindungen umgeestert werden, wodurch das Polycarbonat-Harz gebildet wird. Es ist darauf hinzuweisen, daß es möglich ist, in den vorbeschriebenen Verfahren in chemisch sinnvoller Weise sowohl die aromatischen Dihydroxy-Verbindungen als auch die Monohydroxy-Verbindungen in Form der Alkalimetall-Salze und/oder Bis-chlorameisensäureester und die dann noch zur Gewinnung eines hochmolekularen Produkts erforderliche Menge Phosgen oder Carbonylbromid zu kombinieren. Auch andere Syntheseverfahren für die Bildung der Polycarbonate gemäß der Erfindung, wie sie in der US-PS 3 912 688 offenbart sind, können verwendet werden.

In Verbindung mit der vorliegenden Erfindung sind Silicate Aluminiumsilicate, die entweder wasserhaltig (Tone) oder wasserfrei (Feldspate) sind, so wie die Mineralien der Sil-

limanit-Gruppe (entsprechend $Al_2SiO_5$) und Wollastonit (entsprechend $CaSiO_3$).

Die für die praktische Durchführung der Erfindung geeigneten Silicate können oberflächenbehandelt sein, etwa durch Aufbringen von Haftmitteln, um sie mit verbesserter Kompatibilität mit der Polycarbonat-Matrix auszustatten.

Tone sind Aluminiumsilicat-Mineralien, die durch ihre Kristallstruktur und ihre chemische Zusammensetzung gekennzeichnet sind, und sie sind weithin bekannt und werden für eine Vielzahl von Anwendungen eingesetzt.

Für die praktische Durchführung der Erfindung können Tone, vorzugsweise gebrannte Tone verwendet werden, sofern ihr Feuchtigkeitsgehalt 2,0%, vorzugsweise 0,5% nicht übersteigt.

Unter den in Verbindung mit der vorliegenden Erfindung geeigneten Tonen befinden sich Bentonit, wie er unter der Handelsbezeichnung 660 Bentonite von Whittaker, Clark und Daniels, Inc., South Plainfield, New Jersey, USA erhältlich ist, und gebrannter Kaolin, wie er unter der Handelsbezeichnung Satintone von Engelhard Minerals & Chemicals Corporation, Edison, New Jersey, USA und von anderen Lieferanten erhältlich ist, die in den Arbeitsbeispielen dieser Offenbarung genannt werden. Typischerweise ist ein gebrannter Kaolin, der für die praktische Durchführung der Erfindung geeignet ist, durch die nachstehend aufgeführten Eigenschaften gekennzeichnet:

| | |
|---|---|
| Mittlere Teilchengröße µm | 0,8 |
| Siebrückstand 0,044 mm (325 mesh) max.% | 0,01 |

| | | |
|---|---|---|
| Ölabsorption (ASTM DZ 81-31) | | 85- 95 |
| Ölabsorption (Gardner Coleman) | | 100-120 |
| Farbe (G.E.Helligkeit) | | 90- 92 |
| Brechungsindex | | 1,62 |
| Spezifisches Gewicht | | 2,63 |
| pH | | 4,5-5,5 |
| Kompaktdichte | $kg/dm^3$ (lbs/gal) | 2,62 (21,9) |
| Schüttdichte | $kg/dm^3$ ($lbs/ft^3$) | |
| | lose | 0,16-0,24 (10-15) |
| | fest | 0,24-0,32 (15-20) |
| freie Feuchtigkeit, max.% | | 0,5 |

Andere im Zusammenhang mit der vorliegenden Erfindung geeignete Silicate sind synthetische Natriumaluminiumsilicate, wie sie im Handel erhältlich sind unter der Handelsbezeichnung Sipernat® 44 von der Degussa Corporation, Teterboro, New Jersey,USA. Sipernat ® 44 entspricht etwa der Formel $Na_2O-Al_2O_3-2SiO_2-4H_2O$ und ist durch die nachstehend aufgeführten Eigenschaften gekennzeichnet:

| Eigenschaft | Test-Verfahren | |
|---|---|---|
| Mittlere Größe der Aggregate | DIN 51 033 (Andreasen) | 3-4µm |
| Siebrückstand (Mocker, 45 µm) | DIN 53 580 | < 0,1% |
| Stampfdichte | DIN 53 194 | ca. 450 g/l |
| Trockenverlust (2 h bei 105°C) | DIN 55 921 | --** |
| Glühverlust *** (1 h bei 800°C) | DIN 55 921 | ca. 20% |
| pH-Wert (in 5%iger wäßriger Dispersion) | DIN 53 200 | ca. 11,8 |
| $SiO_2$* | | ca. 42% |
| $Al_2O_3$* | | ca. 36% |

| | |
|---|---|
| $Na_2O$* | ca. 22% |
| $Fe_2O_3$* | ca. 0,02% |

* bezogen auf die 1 h bei 800°C geglühte Substanz
** Messwerte sind nicht konsistent
*** Gesamt-Glühverlust,bezogen auf die ursprüngliche Substanz.

Die mittlere Teilchengröße der für die praktische Durchführung der vorliegenden Erfindungen geeigneten Silicate kann im allgemeinen etwa von 0,05 bis 20 µm, vorzugsweise etwa von 0,075 bis 15 µm betragen, wobei der Bereich von etwa 0,075 bis 5 µm besonders bevorzugt wird.

Die erfindungsgemäßen Polycarbonat-Zusammensetzungen können von 0,025 bis 5 Teile Silicate auf 100 Teile Harz enthalten und so besonders als Konzentrate geeignet sein, die durch Zumischen von Polycarbonat-Harz auf einen bestimmten Füllstoffgehalt verdünnt werden. Die erfindungsgemäßen Polycarbonat-Zusammensetzungen können weiterhin etwa 0,025 bis 1, vorzugsweise etwa 0,025 bis etwa 0,1 Teile Silicate auf 100 Teile Harz enthalten und sich daher besonders für die Herstellung von Feinfolien eignen, die durch ihren niedrigen Koeffizienten der statischen Reibung gekennzeichnet sind.

Obwohl anzunehmen ist, daß die Werte in den nachstehenden Tabellen, in denen Test-Ergebnisse zur Erläuterung des Erfindungsgedankens zusammengefaßt sind, klar sind, werden zur weiteren Erläuterung die nachstehenden Anmerkungen angefügt:

Die in den Tabellen angegebenen Ergebnisse wurden aufgrund der Prüfung von Feinfolien, die durch Vergießen von Lösungen hergestellt wurden, erhalten, und wie in der Fachwelt wohlbekannt ist, geben diese Ergebnisse die Trends wieder, die aufgrund der Untersuchungen extrudierter Feinfolien zu erwarten sind. Es ist weiterhin anzumerken, daß die auf diese Weise erhaltenen Werte der Reibungskoeffizienten signifikant höher sind als die Werte, die bei der Prüfung entsprechender extrudierter Folien erhältlich sind. Dementsprechend sind µs bzw. µk die Koeffizienten der statischen bzw. kinetischen Reibung, die gemäß ASTM D-1894-78 gemessen wurden. Die Symbole 0-0, 0-I und I-I bezeichnen die Oberflächen der untersuchten Proben. Sämtliche Folien, deren Eigenschaften nachstehend angegeben werden, wurden aus Lösungen auf Glas vergossen, und die "Luftseite" der Folien wird mit 0 bezeichnet, wohingegen die Glasseite mit I bezeichnet wird. Der "Foltertest" ("torture test") wird mittels einer 85 g (3 oz.) Spritzgußmaschine bei einer Temperatur von 385°C (725°F) und Preßzyklen von einer Minute durchgeführt und dient der Prüfung der thermischen Beständigkeit einer Harzmasse. Ein Verarbeitungsfachmann kann durch Untersuchung der unter den vorgenannten Verarbeitungsparametern erhaltenen Formteile beurteilen, ob die Masse thermischen Abbau erleidet, beispielsweise nach Einarbeitung von Zusatzstoffen in diese. Eine subjektive Bewertung, die den Grad der thermischen Stabilität angibt, wird in der folgenden Tabelle mitgeteilt.

Messungen des Schmelzflusses wurden als zusätzliches Kriterium für strukturelle und chemische Veränderungen herangezogen, die durch die Einarbeitung des Silicat-Zusatzstoffes bedingt werden können. Eine abnorme Veränderung des Flusses, die eine Depolymerisation oder Vernetzung anzeigen kann, kann auf Verarbeitungsschwierigkeiten hinweisen, die beim Extrudieren der Masse zu

Feinfolien zu erwarten sind. Überraschenderweise scheinen die in der vorliegenden Erfindung verwendeten Silicate den Silicat-Polycarbonat-Systemen einen Grad verbesserter thermischer Beständigkeit zu verleihen.

Die Zusammensetzungen der Polycarbonat-Silicate gemäß der Erfindung werden durch Vermischen eines Polycarbonat-Harzes mit einer vorher festgelegten Menge eines geeigneten Silicats unter Bildung einer homogenen Dispersion desselben in dem Harz hergestellt. Dieses Vermischen kann in jedem geeigneten Mischer, wie er allgemein in der Fachwelt verwendet wird, vorgenommen werden. Die Herstellung der Folien durch Vergießen von Lösungen, Extrudieren und Folien-Blas-Verfahren werden in der Monographie "Chemistry and Physics of Polycarbonates" von H. Schnell, Interscience Publishers, 1964, und in "Polycarbonates" von Christopher und Fox, Reinhold Publishing Corporation, 1962, beschrieben. Die Zusammensetzungen der vorliegenden Erfindung sind geeignet für die Herstellung dünner Folien (weniger als 0,254 mm, 10 mil) mit ausgezeichneter Transparenz und einem niedrigen statischen Reibungskoeffizienten.

Das für die Versuche verwendete Polycarbonat-Harz ist HMS 3119, ein verzweigtes Polycarbonat-Harz mit einer relativen Viskosität von 1,29 bis 1,30 (gemessen an einer 0,5%igen Lösung in Methylenchlorid) und einer Schmelzfluß-Rate von 1,5 bis 2,5 g/10 min gemäß ASTM-D 1238, ein Erzeugnis der Mobay Chemical Corporation. Der statische Reibungskoeffizient (0-0) des HMS 3119 beträgt etwa 10,0. Die Werte der Trübung bzw. Lichtdurchlässigkeit von HMS 3119 betragen 0,4% bzw. 91,9%, Die Folien, deren Eigenschaften nachstehend tabelliert sind, hatten eine Dicke von 0,0254 mm (1 mil).

**TABELLE 1**

| Zusatzstoff (1) | Satintone #5 (2) | | | Satintone Special (2) | | | Satintone X-2211 (3) | | | Optiwhite (4) | | |
|---|---|---|---|---|---|---|---|---|---|---|---|---|
| Beispiel | A | B | C | D | E | F | G | H | I | J | K | L |
| Menge Zusatzstoff (Teile/100 Teile Harz) | 1,0 | 0,5 | 0,1 | 1,0 | 0,5 | 0,1 | 1,0 | 0,5 | 0,1 | 1,0 | 0,5 | 0,1 |
| Schmelzflußindex (6) | 3,1 | 2,4 | 2,3 | 3,0 | 2,3 | 2,5 | 2,6 | 2,7 | 2,4 | 3,2 | 2,5 | 3,1 |
| Foltertest (7) | F | F | E | F | E | E | F | G | E | F | G | E |
| Reibungskoeffizient (8) | | | | | | | | | | | | |
| O-O, µs | 0,650 | 1,60 | 1,53 | 0,477 | 1,02 | 3,08 | 0,660 | 1,39 | 5,18 | 0,807 | 0,558 | 5,18 |
| µk | 0,751 | 0,635 | 0,548 | 0,518 | 0,492 | 0,812 | 0,645 | 1,04 | 0,761 | 0,706 | 0,508 | 0,609 |
| O-I, µs | 0,462 | 1,80 | 0,594 | 0,482 | 0,695 | 4,36 | 0,477 | 2,94 | 4,38 | 0,533 | 0,406 | 2,41 |
| µk | 0,584 | 0,604 | 0,609 | 0,508 | 0,508 | 0,711 | 0,523 | 0,812 | 0,635 | 0,558 | 0,498 | 0,558 |
| I-I, µs | 0,588 | 0,513 | 0,558 | 0,558 | 0,548 | 0,645 | 0,711 | 0,695 | 0,492 | 1,37 | 0,457 | 2,94 |
| µk | 0,802 | 0,558 | 0,711 | 0,660 | 0,660 | 0,782 | 1,12 | 0,853 | 0,492 | 0,939 | 0,685 | 0,533 |
| Lichtdurchlässigkeit % (9) | 91,7 | 91,7 | 91,6 | 91,8 | 91,7 | 91,7 | 91,6 | 91,8 | 91,7 | 91,4 | 91,6 | 91,9 |
| Trübung, % (9) | 1,1 | 0,9 | 1,1 | 1,7 | 0,9 | 0,6 | 1,6 | 1,4 | 0,4 | 3,8 | 2,6 | 0,9 |

**TABELLE 1 (Fortsetzung)**

| Zusatzstoff (1) | Pigment #40 (4) | | | 2459 Ton (5) | | Bentone 660 (10) | | | |
|---|---|---|---|---|---|---|---|---|---|
| Beispiel | M | N | O | P | Q | R | S | T | U |
| Menge Zusatzstoff (Teile/100 Teile Harz) | 1,0 | 0,5 | 0,1 | 1,0 | 0,5 | 0,1 | 1,0 | 0,5 | 0,1 |
| Schmelzflußindex (6) | 3,2 | 2,7 | 2,5 | 3,9 | 3,1 | 2,6 | | | |
| Foltertest (7) | G | F | G | F | F | E | | | |
| Reibungskoeffizient (8) | | | | | | | | | |
| O-O, µs | 0,599 | 0,558 | 9,70 | 0,690 | 1,59 | 5,18 | 0,909 | 5,18 | 9,85 |
| µk | 0,452 | 0,675 | 0,462 | 0,619 | 0,528 | 0,711 | 1,02 | 0,761 | - |
| O-I, µs | 0,477 | 0,721 | 2,80 | 1,51 | 1,74 | 5,18 | 1,60 | 4,68 | 2,45 |
| µk | 0,503 | 0,675 | 0,508 | 0,579 | 0,609 | 0,695 | 0,716 | 0,761 | 0,457 |
| I-I, µs | 0,432 | 0,594 | 0,685 | 0,624 | 0,396 | 0,635 | 2,85 | 0,761 | 1,25 |
| µk | 0,533 | 0,736 | 0,584 | 0,594 | 0,432 | 0,711 | 1,07 | 1,47 | 1,52 |
| Lichtdurchlässigkeit % (9) | 91,7 | 91,8 | 91,7 | 91,7 | 91,8 | 91,9 | | | |
| Trübung, % (9) | 0,7 | 0,6 | 0,5 | 1,0 | 0,7 | 0,4 | | | |

Anmerkungen zu Tabelle 1:

(1) Die Ton-Zusatzstoffe wurden in ein Polycarbonat-Harz HMS 3119 der Mobay Chemical Corporation eingemischt.

(2) Gebrannter Kaolin von Engelhard Minerals & Chemicals Corporation, Edison, New Jersey, USA.

(3) Mit Silan behandeltes Satintone.

(4) Wasserhaltiger Kaolin von Burgess Pigment Company, Sandersville, Georgia, USA.

(5) Gemahlener gebrannter Kaolin von Whittaker, Clark & Daniels, Inc., South Plainfield, New Jersey, USA.

(6) Nach ASTM D-1238.

(7) Vergleiche hierzu die Erläuterung in der Beschreibung; Bewertungen:
F = annehmbar (fair), G = gut, E = ausgezeichnet

(8) Nach ASTM D-1894-78

(9) Nach ASTM D-1003-61

(10) Bentonit von Whittaker, Clark & Daniels, Inc., South Plainfield, New Jersey, USA.

Folien gemäß der vorliegenden Erfindung, die synthetisches Aluminiumsilicat bzw. Wollastonit enthielten, wurden hergestellt und untersucht; die betreffenden Daten sind in Tabelle 2 (synthetisches Aluminiumsilicat) und Tabelle 3 (Wollastonit) angegeben.

TABELLE 2

EIGENSCHAFTEN DURCH GIESSEN HERGESTELLTER FOLIEN AUS POLYCARBONAT/SILICAT-ZUSAMMENSETZUNGEN

| | 1 | 2 | 3 | 4 |
|---|---|---|---|---|
| Polycarbonat-Harz (Gew.-Teile) | 100 (1) | 100 (2) | 100 (1) | 100 (2) |
| Silicat (3) (Gew.-Teile) | 1,0 | 1,0 | - | - |
| Schmelzfluß-Rate (4) g/10 min | 3,1 | 3,4 | 2,0 | - |
| Pellet relative Viskosität | 1,291 | 1,302 | 1,29 | - |
| Eigenschaften der Folie Trübung, % | 4,4 | 5,1 | 0,4 | 0,2 |
| Lichtdurchlässigkeit, % | 91,6 | 91,6 | 91,9 | 91,8 |
| Reibungskoeffizient O-O $\mu_s$ | 0,716 | 5,94 | 10,0 | 10,36 |
| $\mu_k$ | 0,761 | 0,528 | | - |
| O-I $\mu_s$ | 1,52 | 0,564 | | 8,53 |
| $\mu_k$ | 0,888 | 0,508 | | 0,812 |
| I-I $\mu_s$ | 10,15 | 0,787 | | 6,35 |
| $\mu_k$ | - | 1,19 | | 0,508 |

(1) Merlon HMS 3119

(2) Merlon M-50

(3) Sipernat® 44

(4) Nach ASTM D-1238.

## TABELLE 3

### EIGENSCHAFTEN DURCH GIESSEN HERGESTELLTER FOLIEN AUS POLYCARBONAT/WOLLASTONIT-ZUSAMMENSETZUNGEN

| | | | | | | | | | |
|---|---|---|---|---|---|---|---|---|---|
| Polycarbonat-Harz (1), Gew.-Teile | 100 | 100 | 100 | 100 | 100 | 100 | 100 | 100 | 100 |
| Wollastonit (2), Gew.-Teile | 1,0 | 0,5 | 0,1 | - | - | - | - | - | - |
| Wollastonit (3). Gew.-Teile | - | - | - | 1,0 | 0,5 | 0,1 | - | - | - |
| Wollastonit (4), Gew.-Teile | - | - | - | - | - | - | 1,0 | 0,5 | 0,1 |
| Schmelzfluß-Rate g/10 min | 9,5 | 9,4 | 9,5 | 9,3 | 9,3 | 9,6 | 11,9 | 10,6 | 9,6 |
| Foltertest (5) | G | E | E | E | G | E | G | G | G |
| Lichtdurchlässigkeit, % | 91,9 | 91,9 | 91,9 | 91,9 | 91,9 | 92,0 | 91,9 | 91,9 | 91,9 |
| Trübung, % | 0,6 | 0,6 | 0,3 | 0,7 | 0,6 | 0,4 | 0,9 | 0,6 | 0,6 |
| Reibungskoeffizient | | | | | | | | | |
| O-O $\mu_s$ | 5,18 | 7,28 | 5,18 | 5,18 | 6,08 | 6,37 | 0,848 | 1,90 | 8,05 |
| $\mu_k$ | 0,457 | 0,508 | 0,508 | 0,508 | 0,457 | 0,406 | 0,660 | 0,432 | 0,406 |
| O-I $\mu_s$ | 2,70 | 4,14 | 2,71 | 4,97 | 2,12 | 3,57 | 0,711 | 1,29 | 2,84 |
| $\mu_k$ | 0,482 | 0,508 | 0,609 | 0,523 | 0,558 | 0,457 | 0,645 | 0,457 | 0,406 |
| I-I $\mu_s$ | 0,482 | 0,533 | 0,579 | 0,482 | 0,914 | 0,432 | 0,518 | 0,508 | 0,482 |
| $\mu_k$ | 0,508 | 0,508 | 0,584 | 0,508 | 0,584 | 0,538 | 0,761 | 0,487 | 0,457 |

(1) Merlon M-40 von der Mobay Chemical Corporation

(2) G-Wollastokup 3076-1.0, mit Silan beschichtet, von der NYCO Division of Processed Minerals, Inc., 3,5µm

(3) G-Wollastokup KR-0.5, von der NYCO Division of Processed Minerals, Inc., 3,5µm

(4) Wollastonit SW Typ A, AKKAT, Bundesrepublik Deutschland, Teilchengröße 0,25/0,63 µm

(5) Vergleiche die Erläuterungen in der Beschreibung.

Patentansprüche:

1. Polycarbonat-Zusammensetzung, bestehend aus

   (i) einem aromatischen thermoplastischen Polycarbonat-Harz und
   (ii) zwischen 0,025 bis 5 Gewichtsteilen eines Silicats mit einer mittleren Teilchengröße von etwa 0,05 bis 20 µm auf 100 Gewichtsteile Harz.

2. Zusammensetzung nach Anspruch 1, dadurch gekennzeichnet, daß das Silicat gebrannter Ton ist.

3. Zusammensetzung nach Anspruch 1 oder 2, dadurch gekennzeichnet, daß die Menge von (II) zwischen 0,025 und 1 Gewichtsteil, bezogen auf 100 Gewichtsteile Harz, beträgt.

4. Zusammensetzung nach Anspruch 1 oder 2, dadurch gekennzeichnet, daß die Teilchengröße etwa von 0,075 bis 5 µm beträgt.

5. Verfahren zur Herstellung von Folien mittels Vergießen einer Lösung, dadurch gekennzeichnet, daß eine Polycarbonat-Zusammensetzung aus

   (i) einem aromatischen thermoplastischen Polycarbonat-Harz und
   (ii) zwischen 0,025 und 5 Gewichtsteilen, bezogen

auf 100 Gewichtsteile Harz, eines Silicats mit einer mittleren Teilchengröße von 0,05 bis 20 µm verwendet wird.

6. Verfahren zur Herstellung von Folien mittels Filmextrudieren, dadurch gekennzeichnet, daß eine Polycarbonat-Zusammensetzung aus

(i) einem aromatischen thermoplastischen Polycarbonat-Harz und
(ii) zwischen 0,025 und 5 Gewichtsteilen, bezogen auf 100 Gewichtsteile Harz, eines Silicats mit einer mittleren Teilchengröße von 0,05 bis 20 µm verwendet wird.

7. Verfahren zur Herstellung von Folien durch Folienblasen, dadurch gekennzeichnet, daß eine Polycarbonat-Zusammensetzung aus

(i) einem aromatischen thermoplastischen Polycarbonat-Harz und
(ii) zwischen 0,025 und 5 Gewichtsteile, bezogen auf 100 Gewichtsteile Harz, eines Silicats mit einer mittleren Teilchengröße von 0,05 bis 20 µm verwendet wird.

8. Dünne Folien aus aromatischen Polycarbonat-Zusammensetzungen nach Anspruch 1 oder 2.

9. Folien nach Anspruch 8, dadurch gekennzeichnet, daß sie eine Dicke von etwa 0,254 mm (10 mils) oder weniger besitzen.